# EUROPÄISCHE PATENTSCHRIFT

(11) **EP 3 447 598 B1**
(45) Veröffentlichungstag und Bekanntmachung des Hinweises auf die Patenterteilung: **07.07.2021**
(21) Anmeldenummer: 18186899.3
(22) Anmeldetag: 01.08.2018
(51) Int. Cl.: G05D 1/02, B62D 15/02, G08C 17/00

(54) **VERFAHREN ZUM BETREIBEN EINES KRAFTFAHRZEUGS SOWIE KRAFTFAHRZEUG**
METHOD FOR OPERATING A MOTOR VEHICLE AND MOTOR VEHICLE
PROCÉDÉ DE FONCTIONNEMENT D'UN VÉHICULE AUTOMOBILE AINSI QUE VÉHICULE AUTOMOBILE

(30) Priorität: 22.08.2017 DE 102017214650
(43) Veröffentlichungstag der Anmeldung: 27.02.2019
(73) Patentinhaber: VOLKSWAGEN AKTIENGESELLSCHAFT, 38440 Wolfsburg (DE)
(72) Erfinder: Görg, Steffen, 38442 Wolfsburg (DE)

(56) Entgegenhaltungen:
- WO-A1-2017/138920
- DE-A1- 19 902 512
- DE-A1-102015 017 143
- US-A1- 2012 316 680

## Beschreibung

Die Erfindung betrifft ein Verfahren zum Betreiben eines Kraftfahrzeugs gemäß dem Oberbegriff von Patentanspruch 1 sowie ein Kraftfahrzeug.

Ein Verfahren zum Betreiben eines Kraftfahrzeugs ist bereits aus der DE 10 2011 120 991 A1 bekannt. Bei dem Verfahren wird ein Zusteller beim Zustellen von Gütern mittels eines Zustellfahrzeugs unterstützt. Das Zustellfahrzeug weist dabei einen automatischen Fahrmodus auf, in welchem dieses mit einer mobilen Steuereinrichtung zur Steuerung des automatischen Fahrmodus drahtlos kommuniziert. Dabei ist das Zustellfahrzeug in dem automatischen Fahrmodus mittels einer Folgefunktion, in welcher das Zustellfahrzeug von einem Haltepunkt aus einer Bewegung der mobilen Steuereinrichtung automatisch nachfolgt, betreibbar. Der automatische Fahrmodus ist durch Drücken einer Funktionstaste der mobilen Steuereinrichtung, welche mit dem Zustellfahrzeug verbunden ist, auslösbar. In dem automatischen Fahrmodus begleitet das Zustellfahrzeug den Zusteller oder fährt zu ihm hin. Dabei bewegt sich das Zustellfahrzeug auf einer vordefinierten Zustellroute zu der mobilen Steuereinrichtung hin. Das Zustellfahrzeug weist des Weiteren eine in Fahrtrichtung nach vorne gerichtete Umfeldsensorik auf, die Hindernisse in einem Fahrweg des Zustellfahrzeugs erkennt. Mit dem Erkennen eines Hindernisses im Fahrweg wird der automatische Fahrmodus beendet und das Zustellfahrzeug zum Stillstand gebracht.

Überdies ist aus der US 2016/0018228 A1 ein Verfahren zum Betreiben eines Folgefahrzeugs bekannt. Bei dem Verfahren wird das Folgefahrzeug hinter einem Fahrzeug platziert, welchem das Folgefahrzeug folgen soll. Anschließend wird ein mittels einer Kamera des Folgefahrzeugs aufgenommenes Bild einer Umgebung des Folgefahrzeugs auf einem Bildschirm im Folgefahrzeug angezeigt. Der Fahrer des Folgefahrzeugs wählt auf dem Bildschirm das Fahrzeug aus, welchem sein Folgefahrzeug folgen soll. Dieses zu verfolgende Fahrzeug wird als Zielort für ein Fahrzeug-Navigationssystem angegeben. Dieser Zielort wird dynamisch bei einer Bewegung des Fahrzeugs angepasst und es werden Anweisungen für den Fahrer des Folgefahrzeugs bereitgestellt, mittels welchen er dem zu verfolgenden Fahrzeug folgen kann.

Des Weiteren ist aus der DE 199 02 512 A1 ein Verfahren zur Beeinflussung einer Bewegung eines Fahrzeugs durch einen Bediener bekannt, bei welchem das Fahrzeug spurgeführt ist und das Fahrzeug mittels einer Peileinrichtung eine Position des Bedieners erkennen kann um ihm selbstständig zu folgen. Das Fahrzeug kann dann über eine entsprechende Lenk- beziehungsweise Spurführungs- und Fahrelektronik Richtung und Abstand zum Bediener halten.

Aus der DE 10 2012 022 087 A1 ist ein Verfahren zum Steuern eines Einpark- oder Ausparkvorgangs eines Fahrzeugs bekannt, bei welchem eine Position einer Bezugsvorrichtung relativ zu dem Fahrzeug mittels eines rotierenden elektromagnetischen Felds ermittelt wird. Mittels der Bezugsvorrichtung kann das Fahrzeug automatisch ein- oder ausgeparkt werden. Bei dem Verfahren erfolgt eine Identifizierung der Bezugsvorrichtung, über ein Übertragen einer Identifizierungsinformation durch Modulieren des elektromagnetischen Felds. Anschließend kann das Fahrzeug bei dem automatischen Einpark- oder Ausparkvorgang einem die Bezugsvorrichtung bei sich tragenden Benutzer folgen.

Des Weiteren offenbart die US 2012/0316680 A1 einen Roboter, welcher mit einer Sensorikeinrichtung seine Umgebung aufzeichnet. Die aufgezeichnete Umgebung wird an eine Benutzerschnittstelle gesendet, welche einem Benutzer ermöglicht, ein Objekt in der Umgebung des Roboters auszuwählen, welchem der Roboter folgen soll. Anschließend folgt der Roboter dem ausgewählten Objekt.

In der DE 199 02 512 A1 wird der Bediener von den Fahreraufgaben entlastet werden, damit er sich mit seinen eigentlichen Aufgaben befassen kann. Das Fahrzeug wird durch Sensoren auf einer vorgegebenen Spur gehalten. Es darf jedoch nur dann fahren, wenn sich der Bediener in der Nähe befindet, also feststellen kann, ob der Fahrweg frei ist. Das Fahrzeug fährt je nach Bedarf so weit, wie es der Arbeitsablauf erfordert, bzw. die Position des Bedieners zulässt. Bei Bedarf kann das Fahrzeug die vorgegebene Spur verlassen und dem Bediener folgen. Das Verfahren ist für Fahrzeuge bestimmt, die sich in ihrer Position auf den Bediener selbst einstellen sollen.

Aufgabe der vorliegenden Erfindung ist es, ein Verfahren zum Betreiben eines Kraftfahrzeugs zu schaffen, bei welchem das Kraftfahrzeug mittels einer elektronischen Recheneinrichtung über ein mobiles elektronisches Endgerät besonders einfach steuerbar ist.

Diese Aufgabe wird erfindungsgemäß durch ein Verfahren zum Betreiben eines Kraftfahrzeugs sowie durch ein Kraftfahrzeug mit den Merkmalen der unabhängigen Patentansprüche gelöst. Vorteilhafte Ausgestaltungen mit zweckmäßigen Weiterbildungen der Erfindung sind in den jeweils abhängigen Ansprüchen sowie in der folgenden Beschreibung angegeben.

Ein erster Aspekt der Erfindung betrifft ein Verfahren zum Feinjustieren eines Kraftfahrzeugs bezüglich seiner Position, bei welchem eine elektronische Recheneinrichtung des Kraftahrzeugs mit einem sich außerhalb des Kraftfahrzeugs befindenden mobilen elektronischen Endgerät gekoppelt wird. Bei dem mobilen elektronischen Endgerät handelt es sich vorliegend um ein Smartphone und/oder um ein Tablet. Es wird somit das mobile elektronische Endgerät mit der elektronischen Recheneinrichtung des Kraftfahrzeugs über eine drahtlose Funkverbindung verbunden. Des Weiteren wird mittels der elektronischen Recheneinrichtung ein durch das mobile elektronische Endgerät bereitgestelltes Folgesignal empfangen, mittels welchem eine Folgeaufforderung an das Kraftfahrzeug charakterisiert ist. Mit anderen Worten wird mittels des mobilen elektronischen Endgeräts die Folgeaufforderung an das Kraftfahrzeug von dem Besitzer des mobilen elektronischen Endgeräts empfangen und an die elektronische Recheneinrichtung des Kraftfahrzeugs übertragen. Überdies wird mittels der elektronischen Recheneinrichtung wenigstens eine Objektinformation von einer Umfeldsensorikeinrichtung empfangen, wobei die jeweilige Objektinformation eine Position und einen Abstand eines sich innerhalb eines definierten Höchstabstands zum Kraftfahrzeug befindenden Objekts charakterisiert. Die Umfeldsensorikeinrichtung kann eine Lasereinrichtung und/oder eine Kameraeinrichtung und/oder eine Ultraschalleinrichtung umfassen. Die Umfeldsensorikeinrichtung erfasst wenigstens ein Objekt sowie die dazugehörige Position und den zugehörigen Abstand zum Kraftfahrzeug, sofern sich das Objekt innerhalb des definierten Höchstabstands zum Kraftfahrzeug befindet. Die Position und der Abstand werden von der Umfeldsensorikeinrichtung als die jeweilige Objektinformation des jeweiligen von der Umfeldsensorikeinrichtung erfassten Objekts an die elektronische Recheneinrichtung übermittelt. Anschließend wird mittels der elektronischen Recheneinrichtung das Kraftfahrzeug in Abhängigkeit von dem Folgesignal sowie in Abhängigkeit von der wenigstens einen Objektinformation bewegt.

Um eine möglichst einfache Steuerung des Kraftfahrzeugs mittels des mobilen elektronischen Endgeräts zu ermöglichen, ist es erfindungsgemäß vorgesehen, dass mittels der elektronischen Recheneinrichtung die wenigstens eine Objektinformation an das mobile elektronische Endgerät übermittelt wird. Anschließend wird mittels der elektronischen Recheneinrichtung eine von dem mobilen elektronischen Endgerät bereitgestellte Zuordnungsinformation empfangen, wobei die Zuordnungsinformation eine einer jeweiligen Objektinformation zuordenbare Auswahl eines jeweiligen zu verfolgenden Objekts durch den Besitzer charakterisiert, und mittels der elektronischen Recheneinrichtung das Kraftfahrzeug in Abhängigkeit von der Zuordnungsinformation bewegt. Mit anderen Worten wird die wenigstens eine Objektinformation, welche die Position und den Abstand des jeweiligen Objekts relativ zu dem Kraftfahrzeug charakterisiert, an das mobile elektronische Endgerät übermittelt. Hierbei kann die Umfeldsensorikeinrichtung mehrere, eine Mehrzahl von Objekten charakterisierende Objektinformationen über die elektronische Recheneinrichtung für das mobile elektronische Endgerät bereitstellen. Das mobile elektronische Endgerät kann die wenigstens eine Objektinformation dem Besitzer des mobilen elektronischen Endgeräts beispielsweise mittels einer Anzeigeeinrichtung, insbesondere mittels eines Bildschirms ausgeben. Insbesondere werden mittels der Anzeigeeinrichtung sämtliche mittels des elektronischen Endgeräts von dem Kraftfahrzeug empfangene Objektinformationen ausgegeben. Beispielsweise können jeweilige Relativpositionen und/oder Bewegungsrichtungen einer Mehrzahl von Objekten mittels der Anzeigeeinrichtung an den Besitzer ausgegeben werden. Aus dieser Mehrzahl an Objekten kann der Besitzer das Objekt auswählen, welchem das Kraftfahrzeug folgen soll. Bei dem Objekt handelt es sich insbesondere um den Besitzer selbst. Anschließend kann das mobile elektronische Endgerät von dem Besitzer beispielsweise mittels einer Erfassungseinrichtung eine Eingabe empfangen, welche das jeweilige zu verfolgende Objekt charakterisiert. Mit anderen Worten kann der Besitzer das zu verfolgende Objekt durch die Eingabe charakterisieren und über die Erfassungseinrichtung dem mobilen elektronischen Endgerät übermitteln. Bei der Erfassungseinrichtung handelt es sich beispielsweise um eine berührungsempfindliche Oberfläche des Bildschirms. Das mobile elektronische Endgerät übermittelt in Abhängigkeit von der Eingabe die Zuordnungsinformation, welche das durch den Besitzer ausgewählte zu verfolgende Objekt charakterisiert, an die elektronische Recheneinrichtung des Kraftfahrzeugs. Somit wird die elektronische Recheneinrichtung des Kraftfahrzeugs über das zu verfolgende Objekt informiert und kann dem zu verfolgenden Objekt die jeweilige zugehörige Objektinformation zuordnen. Anschließend steuert die elektronische Recheneinrichtung das Kraftfahrzeug in Abhängigkeit von der dem zu verfolgenden Objekt zugeordneten Objektinformation. Das Kraftfahrzeug wird insbesondere vollautomatisiert und somit autonom in Abhängigkeit von der wenigstens einen mittels der Umfeldsensorikeinrichtung ermittelten Objektinformation gesteuert. Beispielsweise ermittelt die Umfeldsensorikeinrichtung mehrere sich innerhalb des definierten Höchstabstands zum Kraftfahrzeug befindende Objekte und übermittelt jeweilige zugehörige Objektinformationen an das mobile elektronische Endgerät. Das mobile elektronische Endgerät gibt dem Besitzer der Anzeigeeinrichtung beispielsweise über entsprechende Symbole die mehreren Objekte sowie deren Position und Abstand relativ zu dem Kraftfahrzeug aus. Der Besitzer kann mittels eines Drückens auf die berührungsempfindliche Oberfläche des Bildschirms das zu verfolgende Objekt aus den mehreren dargestellten Objekten auswählen. Nach Übermittlung der Zuordnungsinformation an die elektronische Recheneinrichtung des Kraftfahrzeugs kann die elektronische Recheneinrichtung das Kraftfahrzeug in Abhängigkeit von der dem zu verfolgenden Objekt zugeordneten Objektinformation sowie in Abhängigkeit von den anderen Objektinformationen der anderen, nicht als zu verfolgend ausgewählten Objekte unterschiedlich bewegen. Hierbei steuert die elektronische Recheneinrichtung das Kraftfahrzeug insbesondere derart, dass das Kraftfahrzeug dem ausgewählten Objekt folgt und zu dem ausgewählten Objekt unterschiedlichen weiteren, in dem definierten Höchstabstand ermittelten Objekten ausweicht um einer Kollision des Kraftfahrzeugs mit den weiteren Objekten vorzubeugen. Über die Zuordnungsinformation kann die elektronische Recheneinrichtung ermitteln, welchem der mittels der Umfeldsensorikeinrichtung ermittelten Objekte das Kraftfahrzeug folgen soll. Mittels der Recheneinrichtung wird über die mittels der Umfeldsensorikeinrichtung bereitgestellte wenigstens eine Objektinformation das Objekt über fahrzeugeigene Sensorik beobachtet und durch Steuern des Kraftfahrzeugs das Objekt verfolgt. Hierbei ist eine durchgehende und somit stehende Verbindung zwischen dem Kraftfahrzeug und dem mobilen elektronischen Endgerät nicht zwingend notwendig. Ausreichend ist das Übertragen der Zuordnungsinformation, sodass die elektronische Recheneinrichtung ermitteln kann, welchem Objekt das Kraftfahrzeug folgend bewegt werden soll. Nach der Auswahl des Objektes ist für eine Steuerung einer Bewegungsrichtung und/oder einer Bewegungsgeschwindigkeit des Kraftfahrzeugs die wenigstens eine von der fahrzeugeigenen Umfeldsensorikeinrichtung bereitgestellte Objektinformation ausreichend. Folglich steuert die elektronische Recheneinrichtung die Bewegungsrichtung und/oder die Bewegungsgeschwindigkeit in Abhängigkeit von der wenigstens einen mittels der Umfeldsensorikeinrichtung bereitgestellten Objektinformation hinsichtlich des zu verfolgenden Objekts und hinsichtlich auszuweichender Objekte. Beispielsweise handelt es sich bei den anderen Objekten um Hindernisse, welche die elektronische Recheneinrichtung bei dem Bewegen des Kraftfahrzeugs beachtet. Der Besitzer kann somit mittels seiner Eingabe steuern, wie die elektronische Recheneinrichtung das Kraftfahrzeug in Abhängigkeit von der wenigstens einen Objektinformation bewegt. Besonders vorteilhaft an dem Verfahren ist, dass sich der Besitzer beim Feinjustieren des Kraftfahrzeugs außerhalb des Kraftfahrzeugs befinden kann. Somit hat der Besitzer einen besonders guten Überblick über eine Umgebung des Kraftfahrzeugs, in welcher das Kraftfahrzeug relativ zu Objekten rangiert werden soll. Der Besitzer kann somit im Gegensatz zu einem sich innerhalb des Kraftfahrzeugs befindenden Fahrzeuginsassen einen Abstand des Kraftfahrzeugs zu jeweiligen Objekten besonders gut einschätzen. Hierdurch ist ein besonders präzises Feinjustieren des Kraftfahrzeugs insbesondere besonders nah an jeweilige Objekte heran möglich, da der Besitzer von außerhalb des Kraftfahrzeugs eine Relativposition des Kraftfahrzeugs zu dessen Umgebung besonders genau und umfangreich wahrnehmen kann.

Es wird das Kraftfahrzeug in seiner Position relativ zu einer Einfahrt und/oder einer Parklücke und/oder einer Garage feinjustiert wird. Das bedeutet, dass mittels des Verfahrens das Kraftfahrzeug in die Einfahrt und/oder in die Parklücke und/oder in die Garage rangiert wird. Hierbei kann insbesondere ein jeweiliger einzuhaltender Mindestabstand zu dem zu verfolgenden Objekt und/oder zu den weiteren Objekten, welchen das Kraftfahrzeug beim Feinjustieren ausweichen soll, in Abhängigkeit von einer jeweiligen Rangiersituation vorgegeben werden. Mittels der elektronischen Recheneinrichtung kann insbesondere über die wenigstens eine Objektinformation ermittelt werden, in welcher Rangiersituation sich das Kraftfahrzeug befindet. Als Rangiersituationen kann das Kraftfahrzeug in die Einfahrt oder in die Parklücke oder in die Garage rangiert werden. Anschließend ermittelt die Recheneinrichtung beispielsweise über eine Zuordnungsvorschrift einen jeweiligen zu dem zu verfolgenden Objekt und/oder zu dem weiteren Objekt, welchem das Kraftfahrzeug ausweichen soll, einzuhaltenden Mindestabstand und steuert das Kraftfahrzeug in Abhängigkeit von den jeweiligen ermittelten Mindestabständen in seiner Position relativ zu den Objekten. Unterschiedlichen Objektklassen der Objekte können darüber hinaus unterschiedliche Mindestabstände in der Zuordnungsvorschrift zugeordnet sein. Folglich wird mittels der elektronischen Recheneinrichtung insbesondere in Abhängigkeit von der wenigstens einen empfangenen Objektinformation die Objektklasse des der Objektinformation zugeordneten Objekts ermittelt. In Abhängigkeit von der Objektklasse des Objekts ermittelt die elektronische Recheneinrichtung über die Zuordnungsvorschrift den der Objektklasse zugeordneten Mindestabstand, welcher beim Steuern des Kraftfahrzeugs durch das Kraftfahrzeug relativ zu dem Objekt einzuhalten ist. So ist bei einer ersten Objektklasse ein erster Mindestabstand zu der ersten Objektklasse angehörigen Objekten einzuhalten und bei einer zu der ersten Objektklasse unterschiedlichen zweiten Objektklasse ist ein zu dem ersten Mindestabstand zweiter Mindestabstand zu der zweiten Objektklasse angehörigen Objekten einzuhalten. Beispielsweise ist zu sich bewegenden Objekten ein größerer Mindestabstand einzuhalten als zu sich nicht bewegenden Objekten. Des Weiteren ist zu als Gegenständen klassifizierten Objekten ein kleinerer Mindestabstand einzuhalten als zu als Lebewesen klassifizierten Objekten. Hierdurch kann eine Kollisionsgefahr des Kraftfahrzeugs mit innerhalb des Höchstabstands angeordneten Objekten besonders gering gehalten werden. Beispielsweise kann der jeweilige einzuhaltende Mindestabstand kleiner als 1 Meter, insbesondere kleiner als 0,5 Meter, insbesondere kleiner als 0,2 Meter sein. Je kleiner der vorgegebene einzuhaltende Mindestabstand ist, desto genauer kann das Kraftfahrzeug relativ zu den Objekten feinjustiert werden und somit besonders präzise hinsichtlich seiner Position relativ zu den Objekten ausgerichtet werden. Beispielsweise kann der Besitzer vorgeben, welchen Mindestabstand das Kraftfahrzeug mindestens relativ zu dem zu verfolgenden Objekt einzuhalten hat. Handelt es sich bei dem zu verfolgenden Objekt um den Besitzer selbst, so kann der Besitzer einen Mindestabstand einstellen, bei welchem er sich gerade noch sicher vor einer Kollision mit dem Kraftfahrzeug fühlt, sodass er beim Feinjustieren des Kraftfahrzeugs ein gutes Gefühl hinsichtlich einer Kollisionsfreiheit des Feinjustierens hat.

In einer vorteilhaften Weiterbildung des Verfahrens ist vorgesehen, dass mittels wenigstens zwei Sensoreinrichtungen der Umfeldsensorikeinrichtung jeweilige das Objekt und/oder eine Umgebung des Kraftfahrzeugs charakterisierende Messwerte erfasst und miteinander verglichen werden und in Abhängigkeit von dem Vergleich die Objektinformation ermittelt wird. Das bedeutet, dass die Umfeldsensorikeinrichtung die wenigstens zwei Sensoreinrichtungen umfasst, mittels welchen jeweils örtlich und zeitlich einander zuordenbare Messwerte des Objektes ermittelbar sind. Folglich wird die wenigstens eine Objektinformation, insbesondere eine jeweilige Relativposition der ermittelten Objekte innerhalb des Höchstabstands zum Kraftfahrzeug, mittels der Sensoreinrichtungen und somit mittels der fahrzeugeigenen Umfeldsensorikeinrichtung ermittelt. Um eine Plausibilität der Messwerte zu überprüfen, werden die Messwerte miteinander verglichen und hinsichtlich ihrer Plausibilität bewertet. Insbesondere werden die jeweiligen Messwerte der unterschiedlichen Sensoreinrichtungen zu demselben Objekt zeitlich und örtlich miteinander verglichen um die jeweiligen Messwerte zu plausibilisieren. In Abhängigkeit von dem Vergleich und insbesondere in Abhängigkeit von der jeweiligen Plausibilität der Messwerte kann aus den Messwerten die das Objekt charakterisierende Objektinformation ermittelt werden. Somit ist die Objektinformation vorteilhafterweise besonders genau und präzise ermittelbar. Mittels der Umfeldsensorikeinrichtung kann somit die Umgebung des Kraftfahrzeugs besonders genau und somit insbesondere mit besonders geringem Messfehler bezüglich der Objektinformationen der ermittelten Objekte erfasst werden. Eine Funkverbindung zwischen dem Kraftfahrzeug und dem mobilen elektronischen Endgerät dient einer Übertragung der mittels der Umfeldsensorikeinrichtung ermittelten Objektinformation, welche insbesondere in Abhängigkeit von den Messwerten beziehungsweise in Abhängigkeit von dem Vergleich der Messwerte ermittelt worden ist. Folglich ist mittels der Umfeldsensorikeinrichtung die Objektinformation besonders präzise und mit einer besonders hohen Sicherheit ermittelbar und über die Funkverbindung für das mobile elektronische Endgerät bereitstellbar.

In einer vorteilhaften Ausgestaltung der Erfindung ist vorgesehen, dass mittels der elektronischen Recheneinrichtung das Kraftfahrzeug bis zu einem definierten, ersten Mindestabstand an das durch die Zuordnungsinformation charakterisierte Objekt angenähert wird. Das bedeutet, dass mittels der elektronischen Recheneinrichtung in Abhängigkeit von der Zuordnungsinformation und in Abhängigkeit von dem Folgesignal das Kraftfahrzeug bis zu dem definierten ersten Mindestabstand an das durch die Zuordnungsinformation charakterisierte Objekt, bei welchem es sich um das von dem Besitzer ausgewählte Objekt handelt, angenähert wird, sofern ein Abstand zwischen dem zu verfolgenden Objekt und dem Kraftfahrzeug als größer als der definierte erste Mindestabstand ermittelt wird. Bewegt sich das Objekt über den definierten ersten Mindestabstand hinaus von dem Kraftfahrzeug weg, so wird das Kraftfahrzeug mittels der elektronischen Recheneinrichtung dem zu verfolgenden Objekt nachgeführt, um das Kraftfahrzeug an das zu verfolgende Objekt bis zu dem definierten ersten Mindestabstand anzunähern. Dadurch kann in besonders vorteilhafter Weise eine "Folge mir"-Funktion (Follow me) geschaffen werden. Beispielsweise kann mittels der "Folge mir"-Funktion ein Rangiervorgang des Kraftfahrzeugs ausgelöst und/oder unterstützt werden und der Besitzer das Kraftfahrzeug mittels des mobilen elektronischen Endgeräts in eine Parklücke führen. Durch ein Einhalten des definierten Mindestabstands, welcher beispielsweise 1,5 Meter, insbesondere 50 Zentimeter, insbesondere 20 Zentimeter betragen kann, kann gewährleistet werden, dass weder das durch die Zuordnungsinformation charakterisierte Objekt, noch der Besitzer durch das Kraftfahrzeug beschädigt beziehungsweise verletzt werden.

In einer weiteren vorteilhaften Ausgestaltung der Erfindung ist vorgesehen, dass mittels der elektronischen Recheneinrichtung das Kraftfahrzeug bei Unterschreiten eines definierten zweiten Mindestabstands zu einem nicht durch die Zuordnungsinformation charakterisierten Objekt angehalten wird. Bei dem nicht durch die Zuordnungsinformation charakterisierten Objekt handelt es sich beispielsweise um ein Hindernis, zu welchem das Kraftfahrzeug den definierten zweiten Mindestabstand einhalten soll und somit bei Unterschreiten des definierten zweiten Mindestabstands zwischen dem Kraftfahrzeug und dem anderen Objekt angehalten wird. Dies ermöglicht eine Vermeidung einer Kollision zwischen dem Kraftfahrzeug und dem nicht durch die Zuordnungsinformation charakterisierten Objekt, insbesondere einem Hindernis.

In einer weiteren Ausgestaltung der Erfindung hat es sich als vorteilhaft erwiesen, wenn mittels der elektronischen Recheneinrichtung das Kraftfahrzeug bis zu dem definierten ersten Mindestabstand von dem durch die Zuordnungsinformation charakterisierten Objekt weg bewegt wird. Das bedeutet, dass die elektronische Recheneinrichtung das Folgesignal sowie das zu verfolgende Objekt charakterisierende Zuordnungsinformation empfängt, und anhand der dem zu verfolgenden Objekt zugehörigen Objektinformation ermittelt, ob sich das zu verfolgende Objekt innerhalb des definierten ersten Mindestabstands von dem Kraftfahrzeug befindet. Ermittelt die elektronische Recheneinrichtung, dass sich das zu verfolgende Objekt innerhalb des definierten ersten Mindestabstands befindet, so bewegt die elektronische Recheneinrichtung das Kraftfahrzeug von dem zu verfolgenden Objekt weg, bis der definierte erste Mindestabstand eingehalten wird. Beispielsweise befindet sich das mobile elektronische Endgerät innerhalb des definierten ersten Mindestabstands zu dem Kraftfahrzeug zu einem Zeitpunkt, zu welchem das mobile elektronische Endgerät das Folgesignal an die elektronische Recheneinrichtung übermittelt. Um ein Einhalten des definierten ersten Mindestabstands zum Kraftfahrzeug zu gewährleisten, wird das Kraftfahrzeug mittels der elektronischen Recheneinrichtung von dem durch die Zuordnungsinformation charakterisierende Objekt weg bewegt, bis sich das Kraftfahrzeug in einem Abstand zu dem zu verfolgenden Objekt befindet, welcher größer oder gleich des ersten definierten Mindestabstands ist. Dies ermöglicht ein Schieben des Kraftfahrzeugs beispielsweise in die Parklücke, indem sich der Besitzer mit dem mobilen elektronischen Endgerät innerhalb des definierten ersten Mindestabstands zu dem Kraftfahrzeug anordnet und das Übertragen des Folgesignals von dem mobilen elektronischen Endgerät an die elektronische Recheneinrichtung auslöst. Beispielsweise kann hierdurch das Kraftfahrzeug von dem Besitzer des mobilen elektronischen Endgeräts in die Parklücke geschoben werden.

In weiterer Ausgestaltung hat es sich als vorteilhaft erwiesen, wenn mittels der elektronischen Recheneinrichtung das Kraftfahrzeug mit einer Geschwindigkeit von maximal 10 km/h insbesondere 5 km/h bewegt wird. Hierdurch kann ein Bremsweg des Kraftfahrzeugs besonders gering gehalten werden und somit eine Wahrscheinlichkeit für eine Kollision zwischen dem zu verfolgenden Objekt und dem Kraftfahrzeug besonders gering gehalten werden. Beispielsweise nähert sich das zu verfolgende Objekt, insbesondere der Besitzer, besonders schnell an das Kraftfahrzeug an, sodass auch bei besonders zeitnahem Anhalten des Kraftfahrzeugs mittels der elektronischen Recheneinrichtung infolge des Unterschreitens des ersten definierten Mindestabstands eine Kollision aufgrund eines jeweiligen Bremswegs des Kraftfahrzeugs zumeist vermieden werden kann.

In einer weiteren vorteilhaften Ausgestaltung der Erfindung ist vorgesehen, dass mittels der elektronischen Recheneinrichtung eine Geschwindigkeit des Kraftfahrzeugs in Abhängigkeit von dem durch die Objektinformation und die Zuordnungsinformation charakterisierten Abstand zwischen dem Kraftfahrzeug und dem zu verfolgenden Objekt eingestellt wird. Das bedeutet, dass das Kraftfahrzeug mittels der elektronischen Recheneinrichtung bei einem ersten Abstand zwischen dem Kraftfahrzeug und dem zu verfolgenden Objekt mit einer ersten Geschwindigkeit bewegt wird, während bei einem zweiten Abstand zwischen Kraftfahrzeug und dem zu verfolgenden Objekt das Kraftfahrzeug mittels der elektrischen Recheneinrichtung mit einer im Vergleich zur ersten Geschwindigkeit größeren, zweiten Geschwindigkeit bewegt wird. Beispielsweise wird das Kraftfahrzeug bei einem Abstand von 30 m zwischen dem Kraftfahrzeug und dem zu verfolgenden Objekt mit einer Geschwindigkeit von 10 km/h bewegt und bei einem Abstand von 15 m zwischen dem Kraftfahrzeug und dem zu verfolgenden Objekt wird das Fahrzeug mit einer Geschwindigkeit von 5 km/h bewegt. Dadurch kann besonders vorteilhaft eine schnelle Feinjustierung des Kraftfahrzeugs bezüglich seiner Position mittels des mobilen elektronischen Endgeräts ermöglicht werden.

In einer weiteren vorteilhaften Ausgestaltung der Erfindung ist vorgesehen, dass mittels des mobilen elektronischen Endgeräts die Auswahl des Besitzers zu dem jeweiligen zu verfolgenden Objekt über einen Kontakt zwischen einem Finger des Besitzers und der Erfassungseinrichtung, insbesondere der berührungsempfindlichen Oberfläche des mobilen elektronischen Endgeräts empfangen wird. Mit anderen Worten wird von der Erfassungseinrichtung ein Kontakt zu dem Finger des Besitzers an einer definierten Stelle der Erfassungseinrichtung erfasst und in Abhängigkeit von dem Kontakt die Zuordnungsinformation für die elektronische Recheneinrichtung bereitgestellt. Somit charakterisiert die mittels der elektronischen Recheneinrichtung empfangene Zuordnungsinformation den Kontakt zwischen dem Finger des Besitzers und der Erfassungseinrichtung des mobilen elektronischen Endgeräts. Die Auswahl kann hierdurch besonders einfach von dem Besitzer getätigt und mittels des mobilen elektronischen Endgeräts empfangen werden.

Hierbei hat es sich als vorteilhaft erwiesen, wenn mittels der elektronischen Recheneinrichtung das Kraftfahrzeug bei Empfangen der Zuordnungsinformation, welche ein Unterbrechen des Kontakts zwischen dem Finger des Besitzers und der Erfassungseinrichtung des mobilen elektronischen Endgeräts charakterisiert, angehalten wird. Das bedeutet, dass die mittels der elektronischen Recheneinrichtung empfangene Zuordnungsinformation charakterisiert, ob zwischen dem Finger des Besitzers und der Erfassungseinrichtung des mobilen elektronischen Endgeräts der Kontakt besteht oder nicht besteht. Anschließend kann mittels der elektronischen Recheneinrichtung bei Ermittlung eines bestehenden Kontakts zwischen dem Finger und der Erfassungseinrichtung das Kraftfahrzeug bewegt werden. Wird ermittelt, dass kein Kontakt zwischen dem Finger und der Erfassungseinrichtung, insbesondere an der definierten Stelle, besteht, so kann das Kraftfahrzeug mittels der elektronischen Recheneinrichtung angehalten werden. Dies ermöglicht eine besonders einfache Steuerung des Kraftfahrzeugs mittels des mobilen elektronischen Endgeräts durch den Besitzer.

In weiterer vorteilhafter Ausgestaltung der Erfindung ist vorgesehen, dass ein Bewegungsradius für das durch die Zuordnungsinformation charakterisierte Objekt vorgesehen ist, innerhalb welchem die erfasste Objektinformation dem zu verfolgenden Objekt mittels der elektronischen Recheneinrichtung zugeordnet wird. Bei dem Bewegungsradius handelt es sich um einen definierten Toleranzbereich, welcher in der elektronischen Recheneinrichtung für das zu verfolgende Objekt hinterlegt ist. Ermittelt die elektronische Recheneinrichtung ein sich innerhalb des Bewegungsradius bewegendes Objekt, so wird die zugehörige Objektinformation mittels der elektronischen Recheneinrichtung dem zu verfolgenden Objekt zugeordnet. Aufgrund des Toleranzbereichs für jeweilige dem zu verfolgenden Objekt zuzuordnenden Objektinformationen kann eine Unterbrechung einer Steuerung des Kraftfahrzeugs mittels der elektronischen Recheneinrichtung zumindest im Wesentlichen vermieden werden. Das Kraftfahrzeug bewegt sich in Abhängigkeit von der Bewegung des zu verfolgenden Objekts und/oder in Abhängigkeit von einem Abstand zwischen dem zu verfolgenden Objekt und dem Kraftfahrzeug von dem Objekt weg oder folgt dem zu verfolgenden Objekt.

Ein zweiter Aspekt der Erfindung betrifft ein Kraftfahrzeug mit einer elektronischen Recheneinrichtung, welche dazu eingerichtet ist, ein Verfahren, wie es bereits im Zusammenhang mit dem erfindungsgemäßen Verfahren beschrieben worden ist, durchzuführen. Die elektronische Recheneinrichtung ist mit einem außerhalb des Kraftfahrzeugs angeordneten mobilen elektronischen Endgerät koppelbar. Das Kraftfahrzeug weist eine Umfeldsensorikeinrichtung auf, mittels welcher wenigstens eine Objektinformationen für die elektronische Recheneinrichtung bereitstellbar ist, wobei die Objektinformationen eine Position und einen Abstand eines sich innerhalb eines definierten Höchstabstands zum Kraftfahrzeug befindenden Objekts charakterisiert. Mittels des mobilen elektronischen Endgeräts ist das Kraftfahrzeug über die elektronische Recheneinrichtung besonders einfach in eine Parklücke rangierbar, indem ein Besitzer des mobilen elektronischen Endgeräts das Bewegen des Kraftfahrzeugs durch seine eigene Bewegung vorgibt.

In diesem Zusammenhang hat es sich als vorteilhaft erwiesen, wenn die Umfeldsensorikeinrichtung eine Lasereinrichtung und/oder eine Kameraeinrichtung und/oder eine Ultraschalleinrichtung umfasst. Sowohl mittels der Lasereinrichtung, bei welcher es sich beispielsweise um ein Lidar handeln kann, als auch mittels der Ultraschalleinrichtung kann besonders vorteilhaft ein Abstand und eine Position eines jeweiligen Objekts relativ zum Kraftfahrzeug ermittelt werden. Mittels der Kameraeinrichtung kann besonders vorteilhaft eine Größe und gegebenenfalls eine Art des jeweiligen Objekts ermittelt werden.

Zu der Erfindung gehören auch Weiterbildungen und Vorteile des erfindungsgemäßen Kraftfahrzeugs, die Merkmale aufweisen, wie sie bereits im Zusammenhang mit den Weiterbildungen und Vorteilen des erfindungsgemäßen Verfahrens beschrieben worden sind. Aus diesem Grund sind die entsprechenden Weiterbildungen und Vorteile des erfindungsgemäßen Kraftfahrzeugs hier nicht noch einmal beschrieben.

Im Folgenden ist ein Ausführungsbeispiel der Erfindung beschrieben. Hierzu zeigt:
- Fig. 1: eine schematischen Draufsicht eines Kraftfahrzeugs mit einer elektronischen Recheneinrichtung sowie mit einer Umfeldsensorikeinrichtung, mittels welcher jeweilige sich innerhalb eines definierten Höchstabstands zum Kraftfahrzeug befindende Objekte erfassbar sind;
- Fig. 2: eine schematische Draufsicht auf ein mobiles elektronisches Endgerät mit einer als Bildschirm ausgeführten Anzeigeeinrichtung auf welcher das Kraftfahrzeug sowie die mittels der Umfeldsensorikeinrichtung erfassten Objekte dargestellt sind;
- Fig. 3: eine weitere schematische Draufsicht des mobilen elektronischen Endgeräts gemäß Fig. 2, wobei ein Besitzer des mobilen elektronischen Endgeräts ein zu verfolgendes Objekt aus den mittels der Anzeigeeinrichtung dargestellten Objekten auswählt;
- Fig. 4: eine schematisch Draufsicht des mobilen elektronischen Endgeräts, wobei mittels der Anzeigeeinrichtung das von dem Besitzer ausgewählte zu verfolgende Objekt mit einem definierten Bewegungsradius dargestellt wird;
- Fig. 5: eine Draufsicht des Kraftfahrzeugs gemäß Fig. 1, wobei das Kraftfahrzeug während eines Bewegungsvorgangs beim Verfolgen des zu verfolgenden Objekts dargestellt ist.

Bei dem im Folgenden erläuterten Ausführungsbeispiel handelt es sich um eine bevorzugte Ausführungsform der Erfindung. Bei dem Ausführungsbeispiel stellen die beschriebenen Komponenten der Ausführungsform jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren ist die beschriebene Ausführungsform auch durch weitere der bereits beschriebenen Merkmale der Erfindung ergänzbar.

In den Figuren sind funktionsgleiche Elemente jeweils mit denselben Bezugszeichen versehen.

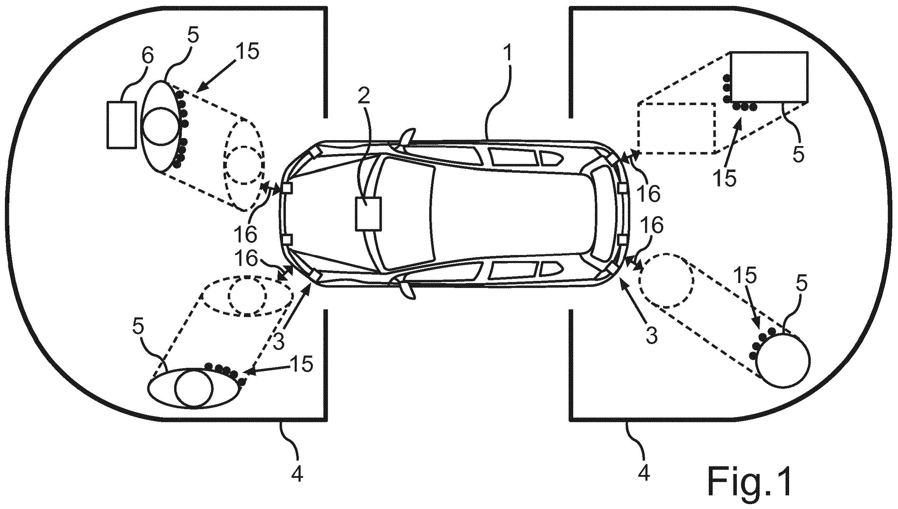

In Fig. 1 ist in einer schematischen Draufsicht ein Kraftfahrzeug 1 dargestellt, welches in einem autonomen Fahrmodus betreibbar ist, in welchem das Kraftfahrzeug 1 mittels einer elektronischen Recheneinrichtung 2 des Kraftfahrzeugs 1 bewegbar ist. Insbesondere ist das Kraftfahrzeug 1 mittels der elektronischen Recheneinrichtung 2 in seiner Position relativ zu einer Einfahrt und/oder einer Parklücke und/oder einer Garage feinjustierbar, um in der Einfahrt und/oder der Parklücke und/oder der Garage autonom angeordnet zu werden. Das Kraftfahrzeug 1 weist zusätzlich zu der elektronischen Recheneinrichtung 2 eine Umfeldsensorikeinrichtung 3 auf, mittels welcher sich in einem Umfeld 4 des Kraftfahrzeugs 1 innerhalb eines definierten Höchstabstands zum Kraftfahrzeug 1 befindende Objekte 5 erfassbar sind. Die Umfeldsensorikeinrichtung 3 umfasst vorliegend eine Ultraschalleinrichtung oder eine Kameraeinrichtung als Sensoreinrichtung. Insbesondere kann die Umfeldsensorikeinrichtung 3 eine Mehrzahl von Sensoreinrichtungen aufweisen, mittels welcher jeweilige die Objekte 5 charakterisierende Messdaten erfassbar sind. Diese mittels der unterschiedlichen Sensoreinrichtungen erfassten Messdaten können durch einen gegenseitigen Vergleich plausibilisiert werden. Im Anschluss an die Plausibilisierung der Messdaten ermittelt die elektronische Recheneinrichtung 2 in Abhängigkeit von den Messdaten wenigstens eine wenigstens ein Objekt 5 charakterisierende Objektinformation. In einer alternativen, nicht dargestellten Ausführungsform kann die Umfeldsensorikeinrichtung sowohl die Ultraschalleinrichtung, als auch die Kameraeinrichtung, als auch eine Lasereinrichtung umfassen. Mittels der Ultraschalleinrichtung ist eine jeweilige Position sowie ein jeweiliger Abstand zwischen einem jeweiligen Objekt 5 und dem Kraftfahrzeug 1 ermittelbar. Des Weiteren ist mittels der Umfeldsensorikeinrichtung 3 die jeweilige die jeweilige Position relativ zu dem Kraftfahrzeug 1 und den jeweiligen Abstand zwischen dem jeweiligen Objekt 5 und dem Kraftfahrzeug 1 charakterisierende Objektinformation von der Umfeldsensorikeinrichtung 3 für die elektronische Recheneinrichtung 2 bereitstellbar. Anhand der jeweiligen Objektinformation ist das Kraftfahrzeug 1 mittels der elektronischen Recheneinrichtung 2 bewegbar. Die elektronische Recheneinrichtung 2 ist überdies mit einem sich außerhalb des Kraftfahrzeugs 1 befindenden mobilen elektronischen Endgerät 6 koppelbar.

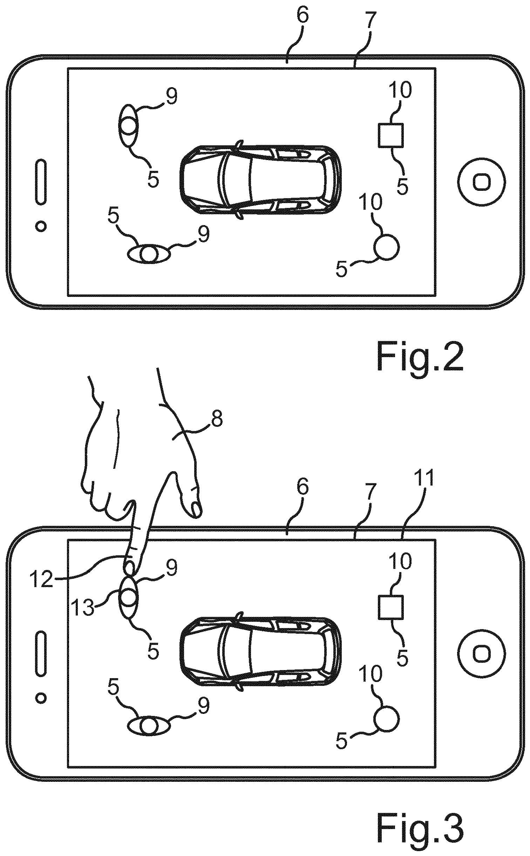

Das mobile elektronische Endgerät 6 ist in den Fig. 2 - 4 in einer jeweiligen schematischen Draufsicht dargestellt. Das mobile elektronische Endgerät 6 umfasst eine Anzeigeeinrichtung 7, vorliegend einen Bildschirm, über welche Informationen an einen Besitzer 8 des mobilen elektronischen Endgeräts 6 ausgebbar sind. Von der elektronischen Recheneinrichtung 2 des Kraftfahrzeugs 1 sind jeweilige, den Objekten 5 zuordenbare Objektinformationen an das mobile elektronische Endgerät 6 übermittelbar und über die Anzeigeeinrichtung 7 dem Besitzer 8 des mobilen elektronischen Endgeräts 6 ausgebbar. Dabei kann dem Besitzer 8 über die Anzeigeeinrichtung 7 mittels Symbolen schematische eine jeweilige Anordnung jeweiliger Objekte 5 relativ zum Kraftfahrzeug 1 sowie deren relativer Abstand zu dem Kraftfahrzeug 1 ausgegeben werden. Hierbei können über die Anzeigeeinrichtung 7 dem Besitzer 8 mittels unterschiedlicher Symbole bewegte Objekte 9 und ruhende Objekte 10 unterschiedlich ausgegeben werden. Vorliegend wird das bewegte Objekt 9 mit einer anderen Farbe ausgegeben als das ruhende Objekt 10.

Das mobile elektronische Endgerät 6 umfasst des Weiteren eine Erfassungseinrichtung 11, bei welcher es sich um eine berührungsempfindliche Oberfläche des Bildschirms handelt, mittels welcher eine Eingabe des Besitzers 8 empfangbar ist. Bei der Eingabe handelt es sich vorliegend um ein Drücken des Besitzers 8 mittels seines Fingers 12 auf die berührungsempfindliche Oberfläche des Bildschirms im Bereich eines mittels der Anzeigeeinrichtung 7 dargestellten Objekts 5, um einen Folgebefehl für das Kraftfahrzeug 1 bezüglich des ausgewählten Objekts 5, welches im Folgenden mit dem Bezugszeichen 13 versehen ist, zu charakterisieren. Das zu verfolgende Objekt 13 kann im Vergleich zu den nicht zu verfolgenden Objekten 5 farblich gekennzeichnet mittels des Bildschirms ausgegeben werden.

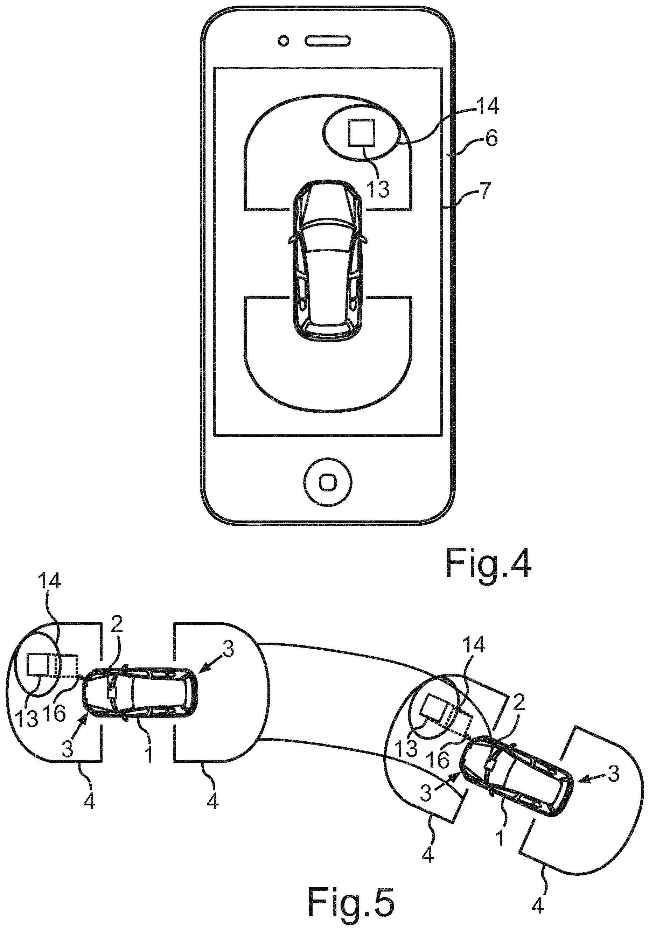

In Fig. 4 ist in einer schematischen Draufsicht das mobile elektronische Endgerät 6 dargestellt, wobei mittels der Anzeigeeinrichtung 7 dem Besitzer 8 eine Position des mittels der Eingabe charakterisierten zu verfolgenden Objekts 13 relativ zu dem Kraftfahrzeug 1 sowie ein Abstand zwischen dem zu verfolgenden Objekt 13 und dem Kraftfahrzeug 1 ausgegeben wird. Des Weiteren wird dem Besitzer 8 mittels der Anzeigeeinrichtung 7 ein Bewegungsradius 14 des zu verfolgenden Objekts 13 dargestellt. Der Bewegungsradius 14 beschreibt einen Toleranzbereich, in welchem die elektronische Recheneinrichtung 2 ein ermitteltes bewegtes Objekt 5 mit dem zu verfolgenden Objekt 13 in Verbindung bringt.

In Fig. 5 ist in einer schematischen Draufsicht das Kraftfahrzeug 1 mit dem zu verfolgenden Objekt 13 dargestellt. Dabei folgt das Kraftfahrzeug 1 dem zu verfolgenden Objekt 13. Das zu verfolgende Objekt 13 kann sich in seinem Bewegungsradius 14 bewegen, ohne eine Steuerung durch die elektronische Recheneinrichtung 2 zu verlieren. Das Kraftfahrzeug 1 ist mittels der elektronischen Recheneinrichtung 2 bis zu dem definierten ersten Mindestabstand 16 an das zu verfolgende Objekt 13 annäherbar.

Zum Betreiben des Kraftfahrzeugs 1 wird die elektronische Recheneinrichtung 2 mit dem sich außerhalb des Kraftfahrzeugs 1 befindenden mobilen elektronischen Endgerät 6 gekoppelt. Des Weiteren wird mittels der elektronischen Recheneinrichtung 2 ein durch das mobile elektronische Endgerät 6 bereitgestelltes Folgesignal empfangen, mittels welchem eine Folgeaufforderung an das Kraftfahrzeug 1 charakterisiert ist. Die Folgeaufforderung kann vorliegend durch die Eingabe des Besitzers 8 beim Drücken auf die berührungsempfindliche Oberfläche des Bildschirms mittels des mobilen elektronischen Endgeräts 6 von dem Besitzer 8 empfangen werden. Bei dem Verfahren wird des Weiteren mittels der elektronischen Recheneinrichtung 2 wenigstens eine Objektinformation von der Umfeldsensorikeinrichtung 3 empfangen, wobei die jeweilige Objektinformation die Position und den Abstand eines jeweiligen, sich innerhalb des definierten Höchstabstands zum Kraftfahrzeug 1 befindenden Objekts 5 charakterisiert. Vorliegend empfängt die elektronische Recheneinrichtung 2 mehrere Objektinformationen welche die jeweilige Position und den jeweiligen Abstand der vorliegend vier von der Umfeldsensorikeinrichtung 3 erfassten Objekte 5 charakterisieren. Anschließend werden die jeweiligen Objektinformationen an das mobile elektronische Endgerät 6 übertragen und mittels der Anzeigeeinrichtung 7 dem Besitzer 8 schematisch ausgegeben. Ein Symbol eines mittels der Anzeigeeinrichtung 7 dargestellten Objekts 5 kann sich in Folge einer Bewegung des jeweiligen Objekts 5 ändern. Mittels der Anzeigeeinrichtung 7 kann der dem zu verfolgenden Objekt 13 zuordenbarer und zugeordneter Bewegungsradius 14 ausgegeben werden. Die Umfeldsensorikeinrichtung 3 umfasst vorliegend zwölf Parkabstandskontrollsensoren (parking distance control sensor) mittels welcher das Umfeld 4 des Kraftfahrzeugs 1 erfassbar ist. Die Umfeldsensorikeinrichtung 3 kann des Weiteren zumindest eine Rückfahrkamera sowie wenigstens eine an einem Dach des Kraftfahrzeugs 1 befestigte Kameraeinrichtung (top view system) umfassen. Mittels der Ultraschalleinrichtung der Umfeldsensorikeinrichtung 3 können diverse Punktewolken 15 erfasst werden, welche die jeweiligen Objekte 5 charakterisieren. Mittels der Umfeldsensorikeinrichtung 3 bereitgestellte Objektinformationen können mittels einer optischen Parksystemanzeige sowohl im Kraftfahrzeug 1 als auch mittels der Anzeigeeinrichtung 7 ausgegeben werden. Dabei kann die optische Parksystemanzeige innerhalb des Kraftfahrzeugs 1 mittels eines modularen Infotainmentbaukastens angezeigt werden.

Mit seiner Eingabe wählt der Besitzer 8 das zu verfolgende Objekt 13 aus und das mobile elektronische Endgerät 6 übermittelt an die elektronische Recheneinrichtung 2 eine das zu verfolgende Objekt 13 charakterisierende Zuordnungsinformation, welche mittels der elektronischen Recheneinrichtung 2 empfangen wird. Die Zuordnungsinformation charakterisiert eine einer jeweiligen Objektinformation zuordenbare Auswahl des jeweiligen zu verfolgenden Objekts 13 durch den Besitzer 8. Die elektronische Recheneinrichtung 2 kann somit das zu verfolgende Objekt 13, welches durch die Zuordnungsinformation charakterisiert ist, ihrer zugehörigen Objektinformation zuordnen. Anschließend wird das Kraftfahrzeug 1 mittels der elektronischen Recheneinrichtung 2 in Abhängigkeit von der Zuordnungsinformation und von der dem zu verfolgenden Objekt 13 zugehörigen Objektinformation bewegt. Dabei kann das Kraftfahrzeug 1 mittels der elektronischen Recheneinrichtung 2 bis zu dem definierten ersten Mindestabstand 16 an das durch die Zuordnungsinformation charakterisierte, zu verfolgende Objekt 13 angenähert werden. Alternativ kann mittels der elektronischen Recheneinrichtung 2 das Kraftfahrzeug 1 - bei einem Unterschreiten des definierten ersten Mindestabstands 16 zwischen dem zu verfolgenden Objekt 13 und dem Kraftfahrzeug 1 - bis zu dem definierten ersten Mindestabstand 16 von dem durch die Zuordnungsinformation charakterisierten, zu verfolgenden Objekt 13 weg bewegt werden. Dabei kann das Kraftfahrzeug 1 mittels der elektronischen Recheneinrichtung 2 in Schrittgeschwindigkeit und vorliegend mit einer Geschwindigkeit von maximal 10 km/h bewegt werden. Dabei kann die Geschwindigkeit, mit welcher das Kraftfahrzeug 1 von der elektronischen Recheneinrichtung 2 bewegt wird, in Abhängigkeit von dem Abstand zwischen dem zu verfolgenden Objekt 13 und dem Kraftfahrzeug 1 geändert beziehungsweise angepasst werden.

Durch Drücken auf eines der mittels der Anzeigeeinrichtung 7 dargestellten Objekte 5 bestätigt der Besitzer 8 das zu verfolgende Objekt 13 und somit seine eigene Position relativ zu dem Kraftfahrzeug 1. Nach der Auswahl des zu verfolgenden Objekts 13 fährt das Kraftfahrzeug 1 autonom mittels der elektronischen Recheneinrichtung 2 los und folgt dem Besitzer 8 in seiner Laufrichtung beziehungsweise dem zu verfolgenden Objekt 13. Hierfür sollte der Besitzer 8 das zu verfolgende Objekt 13 mittels seines Fingers 12 für dessen Auswahl gedrückt halten. Entfernt der Besitzer 8 seinen Finger 12 von der Eingabeeinrichtung 11 somit vom berührungsempfindlichen Bildschirm, wird das Kraftfahrzeug 1 mittels der elektronischen Recheneinrichtung 2 angehalten. Alternativ wird das Kraftfahrzeug 1 mittels der elektronischen Recheneinrichtung 2 bei Unterschreiten des definierten ersten Mindestabstands 16, welcher vorliegend circa 50 Zentimeter beträgt, zwischen dem zu verfolgenden Objekt 13 und dem Kraftfahrzeug 1 angehalten.

Ermittelt die Umfeldsensorikeinrichtung 3 des Kraftfahrzeugs 1 ein Unterschreiten eines definierten zweiten Mindestabstands zwischen dem Kraftfahrzeug 1 und einem der Objekte 5, bei welchem es sich nicht um das zu verfolgende Objekt 13 handelt, so wird das Kraftfahrzeug 1 mittels der elektronischen Recheneinrichtung 2 angehalten um eine Kollision zwischen dem Kraftfahrzeug 1 und dem jeweiligen Objekt 5 zu vermeiden. Der definierte erste Mindestabstand 16 kann dem definierten zweiten Mindestabstand entsprechen oder von diesem unterschiedlich sein.

Dabei kann das beschriebene Verfahren zum Betreiben des Kraftfahrzeugs 1 besonders vorteilhaft durchgeführt werden, wenn das Kraftfahrzeug 1 dazu eingerichtet ist, einen ferngesteuerten Parkvorgang (remote parking) sowie ein von der elektronischen Recheneinrichtung 2 gesteuertes autonomes Fahren durchzuführen.

Bei einem Betreiben des Kraftfahrzeugs 1 mittels der elektronischen Recheneinrichtung 2 und dem Steuern des Kraftfahrzeugs 1 mittels des zu verfolgenden Objekts 13 über das mobile elektronische Endgerät 6 ist ein Rückwärtsrangieren in Einfahrten besonders einfach umsetzbar. Darüber hinaus ist mittels des Verfahrens im Vergleich zu einem ferngesteuerten Parkvorgang (remote parking) eine besonders flexible Steuerung in besonders viele Richtungen möglich. Hierdurch können Lastkraftfahrzeuge besonders einfach in Einfahrten rangiert werden.

Insgesamt zeigt das Beispiel, wie durch die Erfindung eine Folge-mir-Funktion geschaffen werden kann, bei welcher das Kraftfahrzeug 1 einem Bediener, insbesondere dem Besitzer 8 des mobilen elektronischen Endgeräts, welcher neben beziehungsweise vor dem Kraftfahrzeug 1 läuft, folgt.

## Patentansprüche

1. Verfahren zum Feinjustieren eines Kraftfahrzeugs (1) bezüglich seiner Position, bei welchem eine elektronische Recheneinrichtung (2) des Kraftfahrzeugs (1) mit einem sich außerhalb des Kraftfahrzeugs (1) befindenden mobilen elektronischen Endgerät (6) gekoppelt wird, und mittels der elektronischen Recheneinrichtung (2)
- ein durch das mobile elektronische Endgerät (6) bereitgestelltes Folgesignal empfangen wird, mittels welchem eine Folgeaufforderung an das Kraftfahrzeug (1) charakterisiert ist,
- wenigstens eine Objektinformation von einer Umfeldsensorikeinrichtung (3) empfangen wird, wobei die jeweilige Objektinformation eine Position und einen Abstand eines sich innerhalb eines definierten Höchstabstands zum Kraftfahrzeug (1) befindenden Objekts (5) charakterisiert,
- die wenigstens eine Objektinformation an das mobile elektronische Endgerät (6) übermittelt wird,
- eine von dem mobilen elektronischen Endgerät (6) bereitgestellte Zuordnungsinformation empfangen wird, wobei die Zuordnungsinformation eine einer jeweiligen Objektinformation zuordenbare Auswahl eines jeweiligen zu verfolgenden Objekts (13) durch einen Besitzer (8) charakterisiert,
- das Kraftfahrzeug (1) in Abhängigkeit von dem Folgesignal sowie in Abhängigkeit von der wenigstens einen Objektinformation und in Abhängigkeit von der Zuordnungsinformation bewegt wird, **dadurch gekennzeichnet, dass**
- das Kraftfahrzeug in seiner Position relativ zu einer Einfahrt und/oder einer Parklücke und/oder einer Garage feinjustiert wird, wobei mittels der elektronischen Recheneinrichtung (2) in Abhängigkeit von der wenigstens einen empfangenen Objektinformation eine Objektklasse des der Objektinformation zugeordneten Objekts (5) und/oder des zu verfolgenden Objekts (13) ermittelt wird und wobei in Abhängigkeit von der Objektklasse des Objekts (5) und/oder des zu verfolgenden Objekts (13) die elektronische Recheneinrichtung (2) über die Zuordnungsinformation einen der Objektklasse zugeordneten Mindestabstand ermittelt, welcher beim Steuern des Kraftfahrzeugs (1) durch das Kraftfahrzeug (1) relativ zu dem Objekt (5) und/oder zu dem zu verfolgenden Objekt (13) einzuhalten ist.

2. Verfahren nach Anspruch 1,
**dadurch gekennzeichnet, dass**
mittels der elektronischen Recheneinrichtung (2) das Kraftfahrzeug (1) bis zu einem definierten ersten Mindestabstand (14) an das durch die Zuordnungsinformation charakterisierte Objekt (13) angenähert wird.

3. Verfahren nach Anspruch 1 oder 2,
**dadurch gekennzeichnet, dass**
mittels der elektronischen Recheneinrichtung (2) das Kraftfahrzeug (1) bei Unterschreiten eines definierten zweiten Mindestabstands zu einem nicht durch die Zuordnungsinformation charakterisierten Objekt angehalten wird.

4. Verfahren nach einem der vorhergehenden Ansprüche,
**dadurch gekennzeichnet, dass**
mittels der elektronischen Recheneinrichtung (2) das Kraftfahrzeug (1) bis zu einem definierten ersten Mindestabstand (14) von dem durch die Zuordnungsinformation charakterisierten Objekt (13) wegbewegt wird.

5. Verfahren nach einem der vorhergehenden Ansprüche,
**dadurch gekennzeichnet, dass**
mittels der elektronischen Recheneinrichtung (2) das Kraftfahrzeug (1) mit einer Geschwindigkeit von maximal 20 km/h bewegt wird.

6. Verfahren nach einem der vorhergehenden Ansprüche,
**dadurch gekennzeichnet, dass**
mittels der elektronischen Recheneinrichtung (2) eine Geschwindigkeit des Kraftfahrzeugs (1) in Abhängigkeit von dem durch die Objektinformation und die Zuordnungsinformation charakterisierten Abstand zwischen dem Kraftfahrzeug (1) und dem zu verfolgenden Objekt (13) eingestellt wird.

7. Verfahren nach einem der vorhergehenden Ansprüche,
**dadurch gekennzeichnet, dass**
mittels des mobilen elektronischen Endgeräts (6) die Auswahl des Besitzers (8) zu dem jeweiligen zu verfolgenden Objekt (13) über einen Kontakt zwischen einem Finger (12) des Besitzers (8) und einer Erfassungseinrichtung (11) des mobilen elektronischen Endgeräts (6) empfangen wird.

8. Verfahren nach Anspruch 7,
**dadurch gekennzeichnet, dass**
mittels der elektronischen Recheneinrichtung (2) das Kraftfahrzeug (1) bei Empfangen der Zuordnungsinformation, welche ein Unterbrechen des Kontakts zwischen dem Finger (12) des Besitzers (8) und der Erfassungseinrichtung (11) des mobilen elektronischen Endgeräts (6) charakterisiert, angehalten wird.

9. Verfahren nach einem der vorhergehenden Ansprüche,
**dadurch gekennzeichnet, dass**
ein Bewegungsradius (14) für das durch die Zuordnungsinformation charakterisierte Objekt (13) vorgesehen ist, innerhalb welchem die erfasste Objektinformation dem zu verfolgenden Objekt (13) mittels der elektronischen Recheneinrichtung (2) zugeordnet wird.

10. Kraftfahrzeug (1), mit einer elektronischen Recheneinrichtung (2), welche dazu eingerichtet ist, ein Verfahren nach einem der Ansprüche 1 bis 9 durchzuführen und mit einem außerhalb des Kraftfahrzeugs (1) angeordneten mobilen elektronischen Endgerät (6) koppelbar ist, und mit einer Umfeldsensorikeinrichtung (3), mittels welcher wenigstens eine Objektinformation für die elektronische Recheneinrichtung (2) bereitstellbar ist, wobei die Objektinformation eine Position und einen Abstand eines sich innerhalb eines definierten Höchstabstands zum Kraftfahrzeug (1) befindenden Objekts (5) charakterisiert.

11. Kraftfahrzeug nach Anspruch 10,
**dadurch gekennzeichnet, dass**
die Umfeldsensorikeinrichtung (3) eine Lasereinrichtung und/oder eine Kameraeinrichtung und/oder eine Ultraschalleinrichtung umfasst.

## Claims

1. Method for finely adjusting a motor vehicle (1) in terms of its position, in which an electronic computing device (2) of the motor vehicle (1) is coupled to a mobile electronic terminal (6) located outside the motor vehicle (1), and by means of the electronic computing device (2)
- a follow signal provided by the mobile electronic terminal (6) is received, by means of which a follow request to the motor vehicle (1) is characterized,
- at least one object information item is received by an environment sensor device (3), wherein the respective object information item characterizes a position and a distance of an object (5) located within a defined maximum distance from the motor vehicle (1),
- the at least one object information item is transmitted to the mobile electronic terminal (6),
- an association information item provided by the mobile electronic terminal (6) is received, wherein the association information item characterizes a selection of a respective object (13) to be followed by an owner (8), which selection can be associated with a respective object information item,
- the motor vehicle (1) is moved depending on the follow signal, and depending on the at least one object information item, and depending on the assignment information item, **characterized in that**
- the motor vehicle is finely adjusted in terms of its position relative to an entrance and/or a parking space and/or a garage, wherein an object class of the object (5) associated with the object information item and/or of the object (13) to be followed is ascertained by means of the electronic computing device (2) depending on the at least one received object information item; and wherein the electronic computing device (2), via the association information item, ascertains, depending on the object class of the object (5) and/or of the object (13) to be followed, a minimum distance associated with the object class, which minimum distance must be maintained by the motor vehicle (1) relative to the object (5) and/or the object (13) to be followed during the control of the motor vehicle (1).

2. Method according to Claim 1,
**characterized in that**
the motor vehicle (1) is made, by means of the electronic computing device (2), to approach the object (13) **characterized by** the association information item, up to a defined first minimum distance (14).

3. The method according to claim 1 or 2,
**characterized in that**
the motor vehicle (1) is stopped, by means of the electronic computing device (2), if a distance from an object that is not **characterized by** the association information item falls below a defined second minimum distance.

4. Method according to one of the preceding claims,
**characterized in that**
the motor vehicle (1) is moved, by means of the electronic computing device (2), up to a defined first minimum distance (14) away from the object (13) **characterized by** the association information item.

5. Method according to one of the preceding claims,
**characterized in that**
the motor vehicle (1) is moved, by means of the electronic computing device (2), at a velocity of at most 20 km/h.

6. Method according to one of the preceding claims,
**characterized in that**
a velocity of the motor vehicle (1) is set, by means of the electronic computing device (2), depending on the distance between the motor vehicle (1) and the object (13) to be followed, as **characterized by** the object information item and the association information item.

7. Method according to one of the preceding claims,
**characterized in that**
the selection of the owner (8) regarding the respective object (13) to be followed is received, by means of the mobile electronic terminal (6), via a contact between a finger (12) of the owner (8) and a detection device (11) of the mobile electronic terminal (6).

8. Method according to claim 7,
**characterized in that**
the motor vehicle (1) is stopped, by means of the electronic computing device (2), upon receiving the association information item which characterizes an interruption in the contact between the finger (12) of the owner (8) and the detection device (11) of the mobile electronic terminal (6).

9. Method according to one of the preceding claims,
**characterized in that**
a movement radius (14) is provided for the object (13) **characterized by** the association information item, within which movement radius (14) the detected object information item is associated, by means of the electronic computing device (2), with the object (13) to be followed.

10. Motor vehicle (1), comprising an electronic computing device (2) which is configured to implement a method according to one of claims 1 to 9 and can be coupled to a mobile electronic terminal (6) arranged outside the vehicle (1), and comprising an environment sensor device (3) by means of which at least one object information item can be provided for the electronic computing device (2), wherein the object information item characterizes a position and a distance of an object (5) located within a defined maximum distance from the motor vehicle (1).

11. Motor vehicle according to claim 10,
**characterized in that**
the environment sensor device (3) comprises a laser device and/or a camera device and/or an ultrasound device.

## Revendications

1. Procédé d'ajustement fin d'un véhicule automobile (1) par rapport à sa position, selon lequel un dispositif de calcul (2) électronique du véhicule automobile (1) est accouplé à un terminal (6) électronique mobile se trouvant à l'extérieur du véhicule automobile (1) et au moyen du dispositif de calcul (2) électronique
- un signal de suivi mis à disposition par le terminal (6) électronique mobile est reçu, au moyen duquel une demande de suivi au véhicule automobile (1) est caractérisée,
- au moins une information d'objet est reçue d'un agencement de capteurs d'environnement (3), dans lequel l'information d'objet respective caractérise une position et une distance d'un objet (5) se trouvant à moins d'une distance maximale définie par rapport au véhicule automobile (1),
- l'au moins une information d'objet est transmise au terminal (6) électronique mobile,
- une information d'attribution mise à disposition par le terminal (6) électronique mobile est reçue, dans lequel l'information d'attribution caractérise une sélection pouvant être attribuée à une information d'objet respective d'un objet (13) à suivre respectif par un propriétaire (8),
- le véhicule automobile (1) est déplacé en fonction du signal de suivi, ainsi qu'en fonction de l'au moins une information d'objet et en fonction de l'information d'attribution, **caractérisé en ce que**
- le véhicule automobile est ajusté finement dans sa position par rapport à une entrée et/ou une place de stationnement et/ou un garage, dans lequel au moyen du dispositif de calcul (2) électronique, en fonction de l'au moins une information d'objet reçue, une classe d'objet de l'objet (5) attribué à l'information d'objet et/ou de l'objet à suivre (13) est déterminée et dans lequel, en fonction de la classe d'objet de l'objet (5) et/ou de l'objet à suivre (13), le dispositif de calcul (2) électronique détermine en fonction de l'information d'attribution une distance minimale attribuée à la classe d'objet, laquelle doit être maintenue lors de la commande du véhicule automobile (1) par le véhicule automobile (1) par rapport à l'objet (5) et/ou à l'objet à suivre (13).

2. Procédé selon la revendication 1,
**caractérisé en ce que**
au moyen du dispositif de calcul (2) électronique, le véhicule automobile (1) est approché jusqu'à une première distance minimale (14) définie de l'objet (13) **caractérisé par** l'information d'attribution.

3. Procédé selon la revendication 1 ou 2,
**caractérisé en ce que**
au moyen du dispositif de calcul (2) électronique, le véhicule automobile (1) est arrêté en cas de sous-dépassement d'une seconde distance minimale définie par rapport à un objet non **caractérisé par** l'information d'attribution.

4. Procédé selon l'une quelconque des revendications précédentes,
**caractérisé en ce que**
au moyen du dispositif de calcul (2) électronique, le véhicule automobile (1) est éloigné jusqu'à une première distance minimale (14) définie de l'objet (13) **caractérisé par** l'information d'attribution.

5. Procédé selon l'une quelconque des revendications précédentes,
**caractérisé en ce que**
au moyen du dispositif de calcul (2) électronique, le véhicule automobile (1) est déplacé à une vitesse de 20 km/h maximum.

6. Procédé selon l'une quelconque des revendications précédentes,
**caractérisé en ce que**
au moyen du dispositif de calcul (2) électronique, une vitesse du véhicule automobile (1) est réglée en fonction de la distance **caractérisée par** l'information d'objet et par l'information d'attribution entre le véhicule automobile (1) et l'objet à suivre (13).

7. Procédé selon l'une quelconque des revendications précédentes,
**caractérisé en ce que**
au moyen du terminal (6) électronique mobile, la sélection du propriétaire (8) par rapport à l'objet à suivre (13) respectif est reçue au moyen d'un contact entre un doigt (12) du propriétaire (8) et un agencement de détection (11) du terminal (6) électronique mobile.

8. Procédé selon la revendication 7,
**caractérisé en ce que**
au moyen du dispositif de calcul (2) électronique, le véhicule automobile (1) est arrêté lors de la réception de l'information d'attribution, laquelle caractérise une interruption du contact entre le doigt (12) du propriétaire (8) et le dispositif de détection (11) du terminal (6) électronique mobile.

9. Procédé selon l'une quelconque des revendications précédentes,
**caractérisé en ce que**
un rayon de déplacement (14) pour l'objet (13) **caractérisé par** l'information d'attribution est fourni, à l'intérieur duquel l'information d'objet détectée est attribuée à l'objet à suivre (13) au moyen du dispositif de calcul (2) électronique.

10. Véhicule automobile (1), comprenant un dispositif de calcul (2) électronique, lequel est conçu pour mettre en œuvre un procédé selon l'une quelconque des revendications 1 à 9 et lequel peut être accouplé à un terminal (6) électronique mobile disposé à l'extérieur du véhicule automobile (1) et comprenant un agencement de capteurs d'environnement (3), au moyen duquel au moins une information d'objet peut être mise à disposition pour le dispositif de calcul (2) électronique, dans lequel l'information d'objet caractérise une position et une distance d'un objet (5) se trouvant à l'intérieur d'une distance maximale définie par rapport au véhicule automobile (1).

11. Véhicule automobile selon la revendication 10,
**caractérisé en ce que**
l'agencement de capteurs d'environnement (3) comprend un agencement laser et/ou un agencement de caméra et/ou un agencement à ultrasons.
